# EUROPEAN PATENT APPLICATION

(11) **EP 2 590 254 A2**
(43) Date of publication of application: **08.05.2013**
(21) Application number: 12191208.3
(22) Date of filing: 05.11.2012
(51) Int. Cl.: H01M 10/48, B60L 11/18, H01M 10/50

(54) **Battery warm-up apparatus and method thereof**

(30) Priority: 07.11.2011 JP 2011243404
(71) Applicant: AISIN SEIKI KABUSHIKI KAISHA, Kariya-shi, Aichi 448-8650 (JP)
(72) Inventor: Mishima, Keisuke, Kariya-shi, Aichi 448-8650 (JP)
(74) Representative: TBK

(57) **Abstract**

A the battery warm-up apparatus includes an electric motor (2), a battery (4), an electric generator (6) for charging the battery, an engine (7) for driving the electric generator, a refrigeration circuit (8a) arranged to pass through inside the engine in a manner that a temperature medium flows through an inside thereof, a heat exchanger (9), a battery-heating channel (8b) branched from the refrigeration circuit, arranged to pass through the battery and connected to the refrigeration circuit again, a first switching valve (13) arranged at a first portion of the refrigeration circuit, the battery-heating channel being branched from the refrigeration circuit at the first portion, the first switching valve connecting and disconnecting the battery-heating channel relative to the refrigeratiort circuit, a battery temperature sensor (4a), and a controller (15) for operating the first switching valve on the basis of temperature (T_{B}) of the battery and for allowing the temperature medium to flow through the battery-heating channel.

## Description

### TECHNICAL FIELD

This disclosure generally relates to a battery warm-up apparatus and a method thereof.

### BACKGROUND DISCUSSION

A known heating apparatus for an engine and a battery of a hybrid vehicle is disclosed in JP2001-234840A (hereinafter referred to as Patent reference 1). The heating apparatus disclosed in Patent reference 1 includes a heat source for heating the engine and the battery in a case where temperature of the engine and temperature of the battery are lower than predetermined temperatures at low temperatures. According to the heating apparatus disclosed in Patent reference 1, fuel is combusted at the heat source and a heat medium that is heated up is supplied to the engine or to the battery. Thus, the temperatures of the engine and the battery of the hybrid vehicle are increased, and therefore startability at low temperatures is enhanced without using a starter for starting.

A known battery warm-up apparatus for a hybrid vehicle is disclosed in, for example, JPH7-79503A (hereinafter referred to as Patent reference 2). According to the known battery warm-up apparatus for the hybrid vehicle disclosed in Patent reference 2, output voltage of an electric generator is increased up to allowable charging voltage of a battery after an engine is started. As the charging voltage of the battery increases, heat generation due to a charging resistance increases, thereby facilitating warming up of the battery. Further, a known art related to in-vehicle heating, in which a temperature medium that is heated by means of a water-based PTC (Positive Temperature Coefficient) heater, instead of by means of engine exhaust heat, is circulated at low temperatures, is disclosed in "PTC Heater for Electric Vehicles and Plug-in Hybrid Vehicles Using Water Heat Carrier" Mitsubishi Heavy Industries Technical Review Vol. 47 No. 4 (2010), pages 29 to 31 of a special feature of automobile-related technologies (hereinafter referred to as Patent reference 3). According to the known art disclosed in Patent reference 3, a constant heating ability is performed despite voltage fluctuations of a battery. Accordingly, it is considered that the aforementioned water-based PTC heater is used for heating the battery during start-up at low temperatures.

According to the known heating apparatus disclosed in Patent reference 1, however, a combustion device serving as the heat source is needed separately from, that is, in addition to an engine for driving a vehicle. This may lead to a large-sized heating apparatus, deterioration of efficiency in heat generation, and const Increase. Further, according to the known battery warm-up apparatus disclosed in Patent reference 2, because the battery is continually charged and discharged for a long period of time at low temperatures, the battery may be deteriorated, which may reduce a service life of the battery.

Further, in a case where the known water-based PTC heater disclosed in Patent reference 3 is used for warming up the battery during the start-up at low temperatures, a large amount of electric power is consumed at the heater, and thus load applied to the battery increases. This may lead to a reduction in a driving range of a hybrid vehicle or an EV (Electric Vehicle). A need thus exists for a battery warm-up apparatus in which less load is applied to a battery and which is small in size and low in costs, and for a method of warming up the battery in which less load is applied to the battery.

### SUMMARY

According to an aspect of this disclosure, a battery warm-up apparatus includes an electric motor for driving a wheel, a battery for supplying electric power to the electric motor, an electric generator for charging the battery, an engine for driving the electric generator without driving the wheel, a refrigeration circuit arranged to pass through inside the engine and constituting a closed circuit in a manner that a temperature medium flows through an inside of the refrigeration circuit, a heat exchanger arranged on the refrigeration circuit, a battery-heating channel branched from the refrigeration circuit, arranged to pass through the battery and connected to the refrigeration circuit again, a first switching valve arranged at a first portion of the refrigeration circuit, at which the battery-heating channel is branched from the refrigeration circuit, the first switching valve connecting and disconnecting the battery-heating channel relative to the refrigeration circuit, a battery temperature sensor for detecting temperature of the battery, and a controller for operating the first switching valve on the basis of the temperature of the battery which is detected by the battery temperature sensor and for allowing the temperature medium to flow through the battery-heating channel.

According to the above-described structure, the battery warm-up apparatus includes the controller which operates the first switching valve on the basis of the detected temperature of the battery and which allows the temperature medium to flow through the battery-heating channel. Accordingly, the battery is warmed up by using the heat generated by the engine which is for power generation, and therefore the warming-up is performed without increasing consumption of the electric power of the battery. Thus, according to the battery warm-up apparatus of the embodiment, the load or the stress applied to the battery is small.

Further, a small-sized engine may be used for the engine that drives the electric generator, and therefore the battery warm-up apparatus is provided in small in size and low in costs. In this disclosure, the warm-up of the battery corresponds to heating of the battery, when the battery is at low temperatures, so that the temperature of the battery is increased up to a temperature that allows the battery to be charged and discharged.

According to an aspect of this disclosure, the battery warm-up apparatus includes a heater core for a vehicle cabin heater, and the heater core is arranged on the battery-heating channel,

According to the above-described structure, because the heater core for the vehicle cabin heater is provided on the battery-heating channel, the inside of the vehicle cabin is heated by using the heat generated by the engine that is for power generation.

According to an aspect of this disclosure, an engine temperature sensor for detecting temperature of the engine is provided at the engine, a bypass path is connected to the refrigeration circuit in a manner that the bypass path bypasses the heat exchanger, a second switching valve is arranged at a second portion of the refrigeration circuit, at which the bypass path is branched from the refrigeration circuit, the second switching valve selectively allows the temperature medium to flow into the heat exchanger and into the bypass path, and the controller operates the second switching valve on the basis of the temperature of the battery which is detected by the battery temperature sensor or on the basis of the temperature of the engine which is detected by the engine temperature sensor, and thereby stops the temperature medium from flowing to the heat exchanger.

According to the above-described structure, the controller operates the second switching valve on the basis of the detected temperature of the battery or the detected temperature of the engine so that the controller stops the temperature medium from flowing to the heat exchanger, thereby regulating the temperature of the temperature medium on the basis of the temperature of the battery or the temperature of the engine.

According to an aspect of this disclosure, the controller actuates the engine thereby disconnecting the battery-heating channel from the refrigeration circuit by means of the first switching valve and disconnecting the heat exchanger from the refrigeration circuit by means of the second switching valve, and allows the temperature medium to circulate inside the refrigeration circuit and the bypass path in a case where the temperature of the engine which is detected by the engine temperature sensor is less than a first threshold temperature which is predetermined or in a case where the temperature of the engine which is detected by the engine temperature sensor is equal to or less than the first threshold temperature.

According to the above-described structure, in a case where the temperature of the engine is less than the first threshold temperature, or in a case where the temperature of the engine is equal to or less than the first threshold temperature, the controller actuates the engine, disconnects the battery-heating channel from the refrigeration circuit by means of the first switching valve, and disconnects the heat exchanger from the refrigeration circuit by means of the second switching valve. Thus, the controller allows the temperature medium to circulate inside the refrigeration circuit and the bypass path, thereby heating the engine and the temperature medium at an early stage when the engine is started at low temperatures.

According to an aspect of this disclosure, the controller actuates the engine, operates the first switching valve thereby connecting the battery-heating channel to the refrigeration circuit, and allows the temperature medium to circulate inside the refrigeration circuit, the battery-heating channel and the bypass path and to be supplied to the battery in a case where the temperature of the engine which is detected by the engine temperature sensor reaches the first threshold temperature or in a case where the temperature of the engine which is detected by the engine temperature sensor exceeds the first threshold temperature, and in a case where the temperature of the battery is less than a second threshold temperature, which is higher than the first threshold temperature, or in a case where the temperature of the battery is equal to or less than the second threshold temperature.

According to the above-described structure, in a case where the temperature of the engine reaches the first threshold temperature or in a case where the temperature of the engine exceeds the first threshold temperature, and in a case where the temperature of the battery is less than the second threshold temperature or in a case where the temperature of the battery is equal to or less than the second threshold temperature (the second threshold temperature is higher than the first threshold temperature), the controller actuates the engine and the first switching valve. Thus, the battery-heating channel is connected to the refrigeration circuit so that the temperature medium circulates inside the refrigeration circuit, the battery-heating channel and the bypass path, and is supplied to the battery. Accordingly, in a case where the temperature of the battery is low after the engine is started, the temperature medium is supplied to the battery so that the battery is warmed up.

According to an aspect of this disclosure, the controller actuates the engine, operates the second switching valve thereby disconnecting the bypass path from the refrigeration circuit, and allows the temperature medium to circulate inside the refrigeration circuit and the battery-heating channel and to be supplied to the battery and to the heat exchanger in a case where the temperature of the battery which is detected by the battery temperature sensor reaches the second threshold temperature or in a case where the temperature of the battery which is detected by the battery temperature sensor exceeds the second threshold temperature.

According to the above-described structure, in a case where the temperature of the battery reaches the second threshold temperature or in a case where the temperature of the battery exceeds the second threshold temperature, the controller actuates the engine, and operates the second switching valve so that the bypass path is disconnected from the refrigeration circuit, and the temperature medium is allowed to circulate inside the refrigeration circuit and the battery-heating channel, and thus the temperature medium is supplied to the battery and to the heat exchanger. Accordingly, in a case where the temperature of the battery increases up to the second threshold temperature due to the warm-up, the temperature medium flows through the heat exchanger, thereby restricting the battery and the engine from being excessively heated.

According to an aspect of this disclosure, a method of warming up a battery for a vehicle including an electric motor for driving a wheel, a battery for supplying electric power to the electric motor, an electric generator for charging the battery, an engine for driving the electric generator without driving the wheel, a refrigeration circuit arranged to pass through inside the engine and constituting a closed circuit in a manner that a temperature medium flows through an inside of the refrigeration circuit, a heat exchanger arranged on the refrigeration circuit, a battery-heating channel branched from the refrigeration circuit, arranged to pass through the battery and connected to the refrigeration circuit again, a first switching valve arranged at a first portion of the refrigeration circuit, the battery-heating channel being branched from the refrigeration circuit at the first portion, the first switching valve connecting and disconnecting the battery-heating channel relative to the refrigeration circuit, and a battery temperature sensor for detecting temperature of the battery includes the steps of operating the first switching valve on the basis of the temperature of the battery which is detected by the battery temperature sensor and allowing the temperature medium to flow through the battery-heating channel.

Accordingly, the first switching valve is operated on the basis of the detected temperature of the battery, and the temperature medium is allowed to flow through the battery-heating channel. Accordingly, the battery is warmed up by using the heat generated by the engine for power generation, and therefore the warming-up of the battery is performed without increasing the consumption of the electric power of the battery. Consequently, load or the stress applied to the battery is small. In addition, a small-sized engine may be used for the engine 7 that drives the electric generator, and therefore the battery warm-up apparatus is provided in small in size and low in costs.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a block diagram illustrating, in a simplified manner, a running system or a power train of a hybrid vehicle mounted with a battery warm-up apparatus according to an embodiment disclosed here;

Fig. 2 is a simplified diagram illustrating a relationship between temperature of each of an engine and a battery, and each of operation modes according to the battery warm-up apparatus illustrated in Fig. 1;

Fig. 3 is a table illustrating operation states of the engine and each of three-way valves in each of the operation modes illustrated in Fig. 2;

Fig. 4 is a flowchart illustrating a controlling method of the battery warm-up apparatus by a controller illustrated in Fig. 1;

Fig. 5 is a block diagram illustrating a flow state of coolant fluid in an engine warm-up mode according to the embodiment;

Fig. 6 is a block diagram illustrating a flow state of the coolant fluid in a battery warm-up mode 1 according to the embodiment;

Fig. 7 is a block diagram illustrating a flow state of the coolant fluid in a battery warm-up mode 2 according to the embodiment; and

Fig. 8 is a block diagram illustrating a flow state of the coolant fluid in a normal operation mode according to the embodiment.

### DETAILED DESCRIPTION

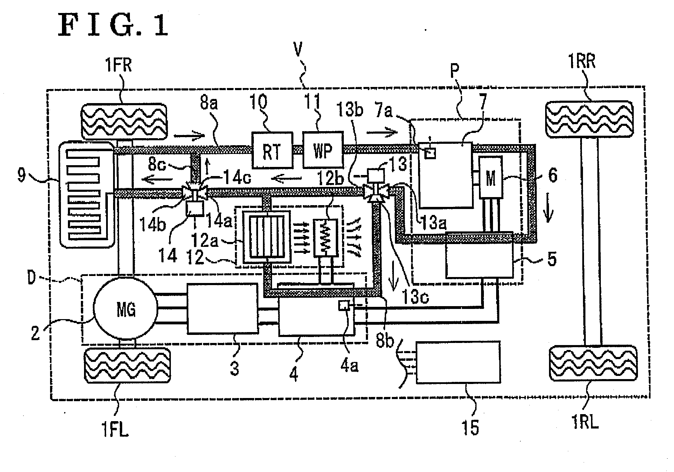

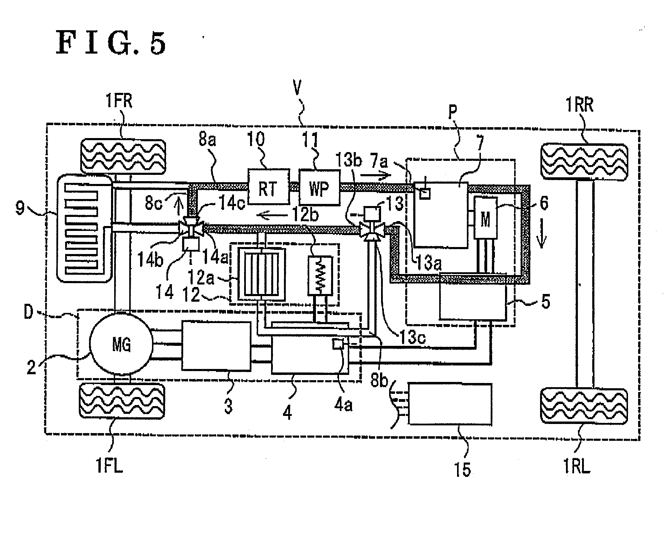

An embodiment of a battery warm-up apparatus related to this disclosure will be explained with reference to Figs. 1 to 8. Fig. 1 schematically illustrates a powertrain of a hybrid vehicle mounted with the battery warm-up apparatus of the embodiment. A vehicle illustrated in Fig. 1 corresponds to a front-wheel drive vehicle. The left side in Fig. 1 corresponds to a vehicle front. However, the embodiment is not limited thereto and may be applied to, for example, a rear-wheel drive vehicle or to a four-wheel drive vehicle. Further, in Fig. 1, each of bold lines illustrates a power supply line and each of hatched passages corresponds to a flow passage of a coolant fluid. In Figs. 5 to 8, each of the hatched passages corresponds to a pipe line through which the coolant fluid actually flows in each of operation modes.

As illustrated in Fig. 1, a vehicle V includes a right driving wheel 1FR (corresponding to a wheel), a left driving wheel 1FL (corresponding to the wheel), a right driven wheel 1RR and a left driven wheel 1RL. The right driving wheel 1FR and the left driving wheel 1FL are comprehensively referred to as driving wheels 1FR and 1FL. A motor generator 2 (corresponding to an electric motor) of the vehicle V is a synchronous machine and is mechanically connected to the driving wheels 1FR and 1FL. In order to drive the driving wheels 1FR and 1FL. The motor generator 2 is electrically connected to an on-vehicle battery 4 (corresponding to a battery) via an inverter 3. The motor generator 2 (i.e., MG), the inverter 3 and the on-vehicle battery 4 constitute a driving unit D of the vehicle V.

An AC-DC converter 5 is connected to the on-vehicle battery 4 (for example, a lithium-ion battery, a lead storage battery, a nickel-cadmium battery, an air battery, a sodium-sulfur battery). A power-generation motor 6 (corresponding to an electric generator) is electrically connected to the AC-DC converter 5. Further, an engine 7 is mechanically connected to the power-generation motor 6 (i.e., M). The engine 7 is provided for driving the power-generation motor 6, that is, the engine 7 does not drive the driving wheels 1FR, 1FL. The engine 7 is constituted by an internal combustion engine having a low displacement (a small output) because the engine 7 is used only for driving the power-generation motor 6. The AC-DC converter 5, the power-generation motor 6, and the engine 7 constitute a power generating unit P of the vehicle V.

Electric power generated by the power-generation motor 6 is converted to direct electric current (DC), and then charged in the on-vehicle battery 4. The electric power charged in the on-vehicle battery 4 is converted back to alternating electric current (AC) by the inverter 3, and then drives the motor generator 2. Further, in a case where a braking operation is conducted at the vehicle V, electric power generation is performed at the motor generator 2, and thus the regenerated electric power is charged in the on-vehicle battery 4.

A coolant pipe line 8a (corresponding to a refrigeration circuit), which is a fluid pipe line, is connected to a water jacket provided inside the engine 7. The coolant pipe line 8a arranged to pass through inside the engine 7 is connected to a radiator 9 (corresponding to a heat exchanger), thereby constituting a closed circuit, that is, a closed-circuit flow path. A reservoir tank 10 (i.e., RT) and an electric water pump 11 (i.e., WP) are provided on the coolant pipe line 8a.

The coolant pipe line 8a is filled with the coolant fluid (corresponding to a temperature medium), which is cooling water, and the electric water pump 11 is configured to pump the coolant fluid stored in the reservoir tank 10 toward the engine 7. The coolant pipe line 8a is arranged to pass through the AC-DC converter 5 and is configured so that the coolant fluid cools the AC-DC converter 5. The coolant pipe line 8a is configured so that the coolant fluid flows therethrough.

A heat branch 8b (corresponding to a battery-heating channel), which is the fluid pipe line similar to the coolant pipe line 8a, is arranged to be branched from the coolant pipe line 8a and is connected to the coolant pipe line 8a again. The heat branch 8b is configured so that the coolant fluid flows therethrough. The heat branch 8b is arranged to pass through the on-vehicle battery 4 and is configured so that the coolant fluid may supply heat to the on-vehicle battery 4.

A heater core 12a of a cabin heater 12 (corresponding to a vehicle cabin heater) is arranged on the heat branch 8b. The heater core 12a is a heat exchanger and is configured to allow the coolant fluid to flow therethrough and to discharge the heat to the air. Further, an electric heater 12b, which is heated by the electric power supplied from the on-vehicle battery 4, is accommodated inside the cabin heater 12. The electric heater 12b functions in a case where a start switch of the cabin heater 12 is turned on in a state where the coolant fluid is not flowing inside the heater core 12a. The cabin heater 12 includes a blower so that the air is blew at the heater core 12a and at the electric heater 12b, thereby heating an inside of the vehicle cabin. Further, a short-cut path 8c (corresponding to a bypass path), which is the fluid pipe line, is connected to the coolant pipe line 8a so as to bypass the radiator 9. The short-cut path 8c is configured so that the coolant fluid flows therethrough.

As illustrated in Fig. 1, a first three-way valve 13 (corresponding to a first switching valve) is arranged at a first portion of the coolant pipe line 8a, the first portion at which the heat branch 8b is branched from the coolant pipe line 8a. The first three-way valve 13 is constituted by an electromagnetic valve including three ports. The first three-way valve 13 selectively connects a first inlet port 13a on the coolant pipe line 8a to a first outlet port 13b and to a first exhaust port 13c. The first inlet port 13a is an inlet port through which the coolant fluid from the engine 7 flows, the first outlet port 13b is an outlet port leading to the radiator 9 and the first exhaust port 18c is an exhaust port to the heat branch 8b. That is, the first three-way valve 13 operates so that the heat branch 8b is brought to be connected to the coolant pipe line 8a and to be cut off or disconnected from the coolant pipe line 8a.

A second three-way valve 14 (corresponding to a second switching valve) is arranged at a second portion of the coolant pipe line 8a, the second portion at which the short-cut path 8c is branched from the coolant pipe line 8a. In a similar way to the first three-way valve 13, the second three-way valve 14 is constituted by an electromagnetic valve including three ports. The second three-way valve 14 selectively connects a second inlet port 14a to a second outlet port 14b and to a second exhaust port 14c, each of which are on the coolant pipe line 8a. The second inlet port 14a is connected to the first outlet port 13b of the first three-way valve 13 via the coolant pipe line 8a, the second outlet port 14b leads to the radiator 9 and the second exhaust port 14c is an exhaust port to the short-cut path 8c, That is, the second three-way valve 14 selectively allows the coolant fluid to flow into the radiator 9 and into the short-cut path 8c.

Each of the driving unit D, the power generating unit P, the cabin heater 12, the electric water pump 11, the first three-way valve 13, and the second three-way valve 14 is connected to a controller 15 so as to be controllable by the controller 15. Further, an engine temperature sensor 7a provided at the engine 7 and a battery temperature sensor 4a provided at the on-vehicle battery 4 are connected to the controller 15.

The battery warm-up apparatus of the embodiment is constituted by the motor generator 2, the on-vehicle battery 4, the power-generation motor 6, the engine 7, the coolant pipe line 8a, the heat branch 8b, the short-cut path 8c, the radiator 9, the heater core 12a, the first three-way valve 13, the second three-way valve 14, the controller 15, the battery temperature sensor 4a, and the engine temperature sensor 7a.

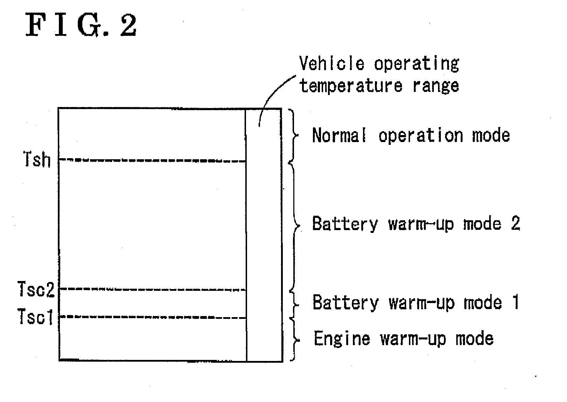

A controlling method of the battery warm-up apparatus, that is, a method of warming up the battery for the vehicle V, which is performed by the controller 15 on the basis of statues of the vehicle V will be explained hereunder. Fig. 2 illustrates the temperature range, that is, a vehicle operating temperature range, in which the vehicle V is operable. In Fig. 2, the temperature becomes higher toward an upper portion of Fig. 2, In Fig. 2, the engine 7 performs a normal operation mainly when the temperature of the engine 7 is equal to or greater than an engine operation lower-limit temperature Tsc1. Further, in Fig. 2, the on-vehicle battery 4 performs a normal operation mainly when the temperature of the on-vehicle battery 4 is equal to or greater than a battery operation lower-limit temperature Tsc2.

As illustrated in Fig. 2, when temperature of the engine 7 is less than the engine operation lower-limit temperature Tsc1 corresponding to a first threshold temperature (or when the temperature of the engine 7 is equal to or less than the engine operation lower-limit temperature Tsc1), the battery warm-up apparatus is set to be in an engine warm-up mode. When the temperature of the engine 7 reaches the engine operation lower-limit temperature Tsc1 (or in a case where the temperature of the engine 7 exceeds the engine operation lower-limit temperature Tsc1) and when temperature of the on-vehicle battery 4 is less than the battery operation lower-limit temperature Tsc2 corresponding to a second threshold temperature (or when the temperature of the on-vehicle battery 4 is equal to or less than the battery operation lower-limit temperature Tsc2), the battery warm-up apparatus is set to be in a battery warm-up mode 1. The battery operation lower-limit temperature Tsc2 is higher than the engine operation lower-limit temperature Tsc1. In a case where the temperature of the on-vehicle battery 4 reaches the battery operation lower-limit temperature Tsc2 (or in a case where the temperature of the on-vehicle battery 4 exceeds the battery operation lower-limit temperature Tsc2), the battery warm-up apparatus is set to be in a battery warm-up mode 2. Further, in a case where the temperature of the on-vehicle battery 4 reaches a reference upper-limit temperature Tsh (or in a case where the temperature of the on-vehicle battery 4 exceeds the reference upper-limit temperature Tsh), the battery warm-up apparatus is set to be in a normal operation mode.

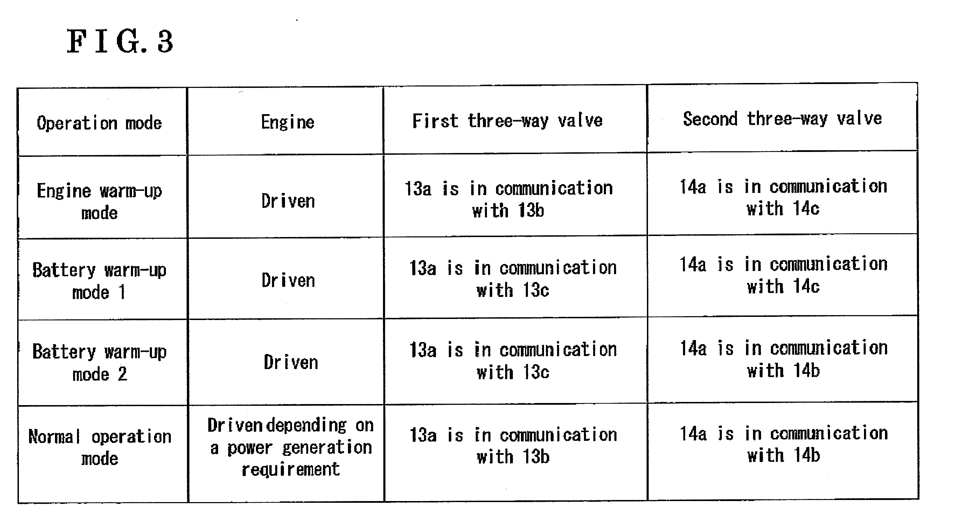

As illustrated in Fig. 3, when the battery warm-up apparatus is in the engine warm-up mode, the engine 7 is always actuated. Further, in the engine warm-up mode, the first inlet port 13a of the first three-way valve 13 is in communication with the first outlet port 13b, and thus the heat branch 8b is cut off or disconnected from the coolant pipe line 8a. Further, in the engine warm-up mode, the second inlet port 14a of the second three-way valve 14 is in communication with the second exhaust port 14c, and thus the radiator 9 is cut off or disconnected from the coolant pipe line 8a. In the engine warm-up mode, electric current does not flow from the AC-DC converter 5 to the on-vehicle battery 4, and thus the electric charge into the on-vehicle battery 4 is stopped.

As illustrated in Fig. 3, when the battery warm-up apparatus is in the battery warm-up mode 1, the engine 7 is always actuated. Further, in the battery warm-up mode 1, the first inlet port 13a of the first three-way valve 13 is in communication with the first exhaust port 13c, and thus the heat branch 8b is connected to the coolant pipe line 8a. Further, in the battery warm-up mode 1, the second inlet port 14a of the second three-way valve 14 is in communication with the second exhaust port 14c, and thus the radiator 9 is cut off or disconnected from the coolant pipe line 8a. In the battery warm-up mode 1, basically, the electric current does not flow from the AC-DC converter 5 to the on-vehicle battery 4, and thus the electric charge into the on-vehicle battery 4 is stopped. However, it may be set so that the electric charge into the on-vehicle battery 4 is started in the battery warm-up mode 1.

As illustrated in Fig. 3, when the battery warm-up apparatus is in the battery warm-up mode 2, the engine 7 is always actuated. Further, in the battery warm-up mode 2, the first inlet port 13a of the first three-way valve 13 is in communication with the first exhaust port 13c, and thus the heat branch 8b is connected to the coolant pipe line 8a. Further, in the battery warm-up mode 2, the second inlet port 14a of the second three-way valve 14 is in communication with the second outlet port 14b, and thus the short-cut path 8c is cut off or disconnected from the coolant pipe line 8a. In the battery warm-up mode 2, the electric current flows from the AC-DC converter 5 to the on-vehicle battery 4, and thus the electric charge into the on-vehicle battery 4 is properly conducted.

As illustrated in Fig. 3, when the battery warm-up apparatus is in the normal operation mode, the engine 7 is actuated or driven depending on a power generation requirement at the vehicle V. Further, in the normal operation mode, the first inlet port 13a of the first three-way valve 13 is in communication with the first outlet port 13b, and thus the heat branch 8b is cut off or disconnected from the coolant pipe line 8a. Further, in the normal operation mode, the second inlet port 14a of the second three-way valve 14 is in communication with the second outlet port 14b, and thus the short-cut path 8c is cut off or disconnected from the coolant pipe line 8a. In the normal operation mode, the electric current flows from the AC-DC converter 5 to the on-vehicle battery 4, and thus the electric charge into the on-vehicle battery 4 is properly conducted.

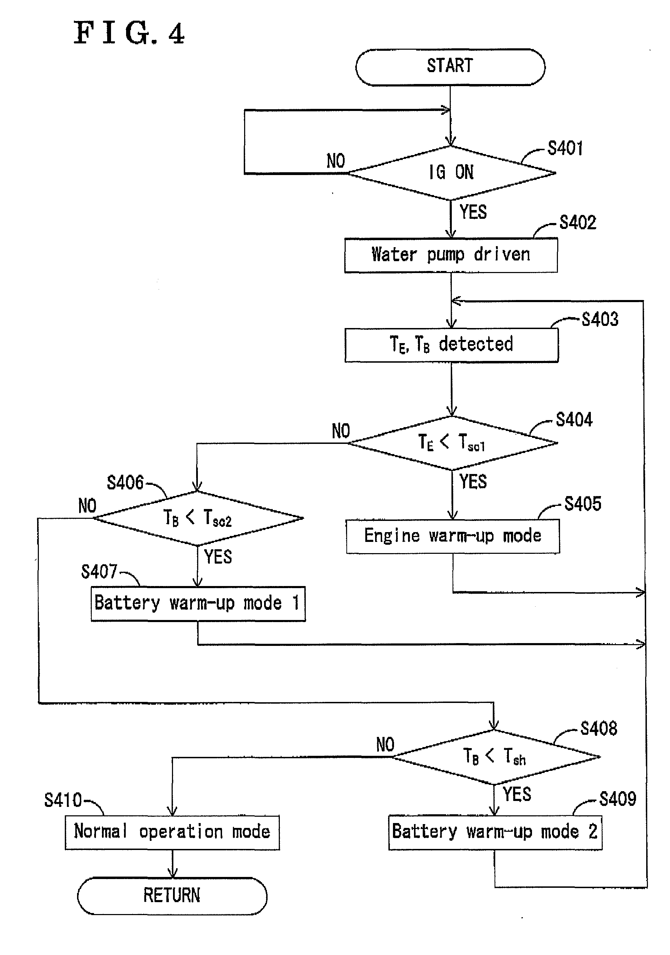

As illustrated in a flowchart of Fig. 4, in a case where an ignition switch (i.e., IG) is activated at the vehicle V (Step S401), the electric water pump 11 of the battery warm-up apparatus is actuated or driven (Step S402). In a case where an engine temperature T_{E} detected by the engine temperature sensor 7a and a battery temperature T_{B} detected by the battery temperature sensor 4a are inputted into the controller 15 (Step S403), it is determined whether or not the engine temperature T_{E} is less than the engine operation lower-limit temperature Tsc1 (Step S404).

For example, in a case where the vehicle V is started at low temperatures and when the temperature T_{E} is less than the engine operation lower-limit temperature Tsc1, it is determined that the engine 7 needs to be warmed up, and therefore the battery warm-up apparatus is set to be in the engine warm-up mode (Step S405). Accordingly, the engine 7 is always actuated for warming up, the first inlet port 13a of the first three-way valve 13 is in communication with the first outlet port 13b, and the second inlet port 14a of the second three-way valve 14 is in communication with the second exhaust port 14c. Consequently, the coolant fluid pumped by the electric water pump 11 circulates inside the coolant pipe line 8a and the short-cut path 8c (illustrated in Fig. 5). The coolant fluid circulates among the electric water pump 11, the engine 7, the AC-DC converter 5, the first three-way valve 13, the second three-way valve 14 and the reservoir tank 10 in that order. Because the coolant fluid bypasses the radiator 9, the engine 7 and the coolant fluid are rapidly heated.

In the engine warm-up mode, each of the engine temperature T_{E} and the battery temperature T_{B} is constantly detected at a predetermined time interval (Step S403) and the engine temperature T_{E} is compared relative to the engine operation lower-limit temperature Tsc1 (Step S404). When the battery warm-up apparatus continues to be in the engine warm-up mode and in a case where the engine temperature T_{E} reaches the engine operation lower-limit temperature Tsc1, it is determined whether or not the battery temperature T_{B} is less than the battery operation lower-limit temperature Tsc2 (Step S406).

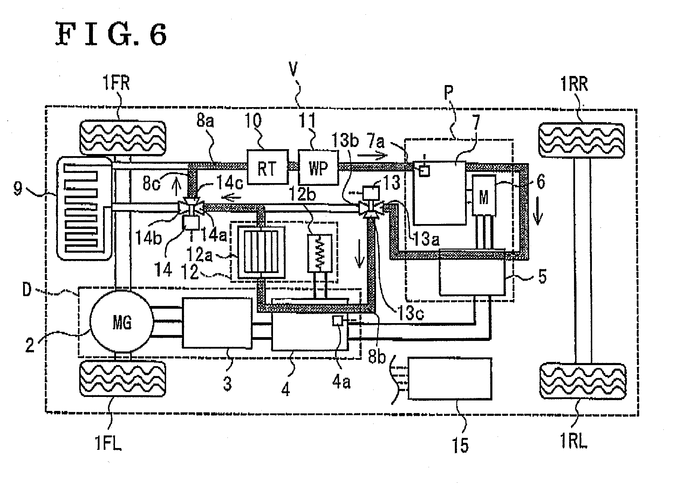

In a case where the battery temperature T_{B} is less than the battery operation lower-limit temperature Tsc2, it is determined that the on-vehicle battery 4 needs to be warmed up, and therefore the battery warm-up apparatus is set to be in the battery warm-up mode 1 (Step S407). Specifically, the engine 7 is always actuated and the first inlet port 13a of the first three-way valve 13 is in communication with the first exhaust port 13c of the first three-way valve 13 and the second inlet port 14a of the second three-way valve 14 is in communication with the second exhaust port 14c of the second three-way valve 14. Thus, the heat branch 8b is connected to the coolant pipe line 8a and the radiator 9 is cut off or disconnected from the coolant pipe line 8a. Accordingly, the coolant fluid circulates inside the coolant pipe line 8a, the heat branch 8b and the short-cut path 8c (as illustrated in Fig. 6). The coolant fluid circulates among the electric water pump 11, the engine 7, the AC-DC converter 5, the first three-way valve 13, the on-vehicle battery 4, the heater core 12a, the second three-way valve 14 and the reservoir tank 10 in that order.

The coolant fluid heated up by the engine 7 flows through the heat branch 8b and warms up the on-vehicle battery 4. The coolant fluid discharges the heat at the heater core 12a of the cabin heater 12 as flowing through the heat branch 8b. At this time, in a case where the start switch of the cabin heater 12 is on, the heat discharged by the coolant fluid is used for heating the vehicle cabin.

In the battery warm-up mode 1, each of the engine temperature T_{E} and the battery temperature T_{B} is constantly detected at the predetermined time interval (Step S403). After the engine temperature T_{E} is compared relative to the engine operation lower-limit temperature Tsc1 (Step S404), the battery temperature T_{B} is compared relative to the battery operation lower-limit temperature Tsc2 (Step S406). When the battery warm-up apparatus continues to be in the battery warm-up mode 1 and in a case where the battery temperature T_{B} reaches the battery operation lower-limit temperature Tsc2, it is determined whether or not the battery temperature T_{B} is less than the reference upper-limit temperature Tsh (Step S408).

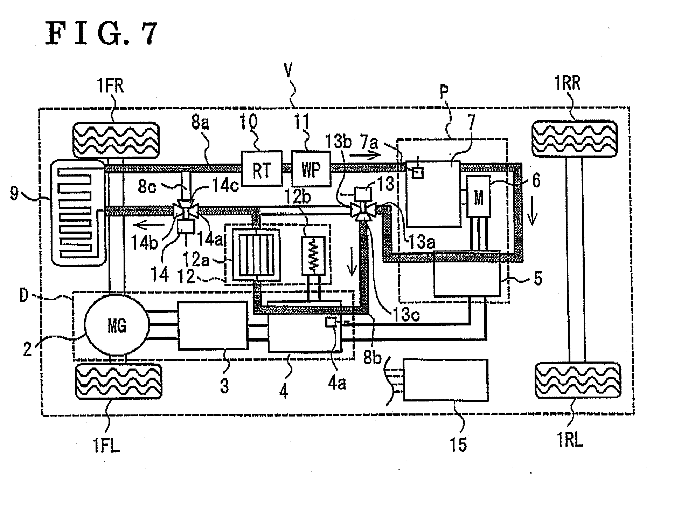

In a case where the battery temperature T_{B} reaches the battery operation lower-limit temperature Tsc2 and the battery temperature T_{B} is less than the reference upper-limit temperature Tsh, it is determined that the coolant fluid needs to be cooled down, and therefore the battery warm-up apparatus is set to be in the battery warm-up mode 2 (Step S409). Specifically, the engine 7 is always actuated, the first inlet port 13a of the first three-way valve 13 is in communication with the first exhaust port 13c, and the second inlet port 14a of the second three-way valve 14 is in communication with the second outlet port 14b. Thus, the heat branch 8b is connected to the coolant pipe line 8a, the short-cut path 8c is cut off or disconnected from the coolant pipe line 8a, and the radiator 9 is connected to the coolant pipe line 8a. Accordingly, the coolant fluid circulates inside the coolant pipe line 8a, the heat branch 8b and the radiator 9 (illustrated in Fig. 7). The coolant fluid circulates among the electric water pump 11, the engine 7, the AC-DC converter 5, the first three-way valve 13, the on-vehicle battery 4, the heater core 12a, the second three-way valve 14, the radiator 9 and the reservoir tank 10 in that order.

The coolant fluid heated up by the engine 7 flows through the heat branch 8b and warms up the on-vehicle battery 4. After this, the coolant fluid discharges the heat to the air at the radiator 9, and thus is cooled down. At this time, in a case where the start switch of the cabin heater 12 is on, the heat discharged by the coolant fluid is used for heating the vehicle cabin in a similar manner to that in the battery warm-up mode 1.

In the battery warm-up mode 2, the engine temperature T_{E} and the battery temperature T_{B} are constantly detected at the predetermined time interval (Step S403). After the engine temperature T_{E} is compared relative to the engine operation lower-limit temperature Tsc1 (Step S404), and after the battery temperature T_{B} is compared relative to the battery operation lower-limit temperature Tsc2 (Step S406), the battery temperature T_{B} is compared relative to the reference upper-limit temperature Tsh (Step S408).

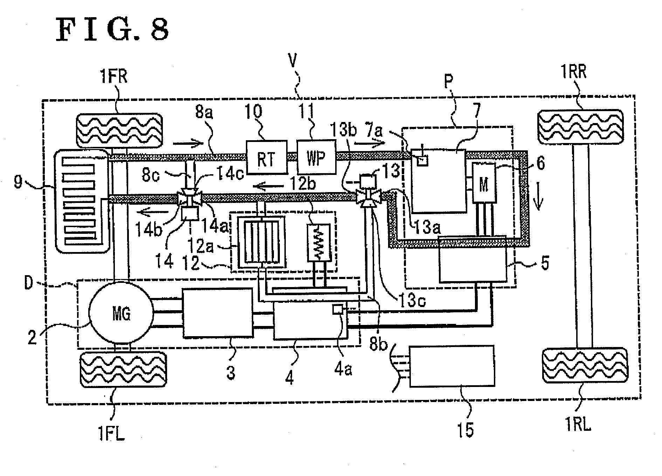

When the battery warm-up apparatus continues to be in the battery warm-up mode 2 and in a case where the battery temperature T_{B} reaches the reference upper-limit temperature Tsh, it is determined that the warming-up of the on-vehicle battery 4 is completed, and then the battery warm-up apparatus is set to be in the normal operation mode (Step S410). Specifically, the engine 7 is actuated depending on the power generation requirement at the vehicle V, and the first inlet port 13a of the first three-way valve 13 is in communication with the first outlet port 13b and the second Inlet port 14a of the second three-way valve 14 is in communication with the second outlet port 14b. Thus, the heat branch 8b is cut off or disconnected from the coolant pipe line 8a and the radiator 9 is connected to the coolant pipe line 8a. Accordingly, the coolant fluid circulates inside the coolant pipe line 8a and the radiator 9 (illustrated in Fig. 8). The coolant fluid circulates among the electric water pump 11, the engine 7, the AC-DC converter 5, the first three-way valve 13, the second three-way valve 14, the radiator 9 and the reservoir tank 10 in that order. The coolant fluid, after flowing through and then out of the engine 7, discharges the heat at the radiator 9, thereby cooling the engine 7. In many cases in the normal operation mode, temperature inside the vehicle cabin is increased enough, and thus there are no problems even though the coolant fluid does not flow through the heater core 12a,

According to the aforementioned embodiment, the battery warm-up apparatus includes the controller 15 which operates the first three-way valve 13 on the basis of the detected temperature and which allows the coolant fluid to flow through the heat branch 8b. Accordingly, the on-vehicle battery 4 is warmed up by using the heat generated by the engine 7 for power generation, and therefore the warming-up is performed without increasing consumption of the electric power of the on-vehicle battery 4. Thus, according to the battery warm-up apparatus of the embodiment, load or stress applied to the on-vehicle battery 4 is small.

Specifically, because an amount of the electric power consumed from the on-vehicle battery 4, that is, the amount of the electric power deducted from the on-vehicle battery 4, is limited to a small amount that corresponds to an amount of the electric power used when the engine 7 starts, the load applied to the on-vehicle battery 4 may be minimized, which results in an increase of a cruising range of the vehicle. Further, a small-sized engine may be used for the engine 7 that drives the power-generation motor 6 because the engine 7 is not used for driving the driving wheels 1FR, 1FL, and therefore the battery warm-up apparatus is provided in small in size and low in costs.

Further, because the heater core 12a for the cabin heater 12 is provided on the heat branch 8b, the inside of the vehicle cabin is heated by using the heat generated by the engine 7 for power generation, and thus an influence of the usage of the cabin heater 12 on the cruising range of the vehicle is reduced. Further, even though the cabin heater 12 is activated for heating the vehicle cabin, an amount of energy which is used for heating the vehicle cabin is provided by the power-generation motor 6 because the on-vehicle battery 4 becomes ready to be charged after being warmed up. Further, the electric charge into the on-vehicle battery 4 may be performed at an amount of heat left after deducting the amount of energy used by the cabin heater 12. In other words, by using the amount of heat after deducting the amount of energy used by the cabin heater 12 from the heat generated by the engine 7, the on-vehicle battery 4 may be warmed up to be ready for being charged with electricity.

The controller 15 operates the second three-way valve 14 on the basis of the detected temperature of the on-vehicle battery 4 or the detected temperature of the engine 7 so that the controller 15 stops the coolant fluid from flowing to the radiator 9, thereby regulating the temperature of the coolant fluid on the basis of the temperature of the on-vehicle battery 4 or the temperature of the engine 7.

Further, in a case where the temperature of the engine 7 is less than the engine operation lower-limit temperature Tsc1, which is predetermined, or in a case where the temperature of the engine 7 is equal to or less than the engine operation lower-limit temperature Tsc1, the controller 15 actuates or operates the engine 7, disconnects the heat branch 8b from the coolant pipe line 8a by means of the first three-way valve 13, and disconnects the radiator 9 from the coolant pipe line 8a by means of the second three-way valve 14. Thus, the controller 15 allows the coolant fluid to circulate inside the coolant pipe line 8a and the short-cut path 8c, thereby heating the engine 7 and the coolant fluid at an early stage when the engine 7 is started at low temperatures.

Further, in a case where the temperature of the engine 7 reaches the engine operation lower-limit temperature Tsc1 or in a case where the temperature of the engine 7 exceeds the engine operation lower-limit temperature Tsc1, and at the same time, in a case where the temperature of the on-vehicle battery 4 is less than the battery operation lower-limit temperature Tsc2 (the battery operation lower-limit temperature Tsc2 is higher than the engine operation lower-limit temperature Tsc1) or in a case where the temperature of the on-vehicle battery 4 is equal to or less than the battery operation lower-limit temperature Tsc2, the controller 15 actuates the engine 7, and operates the first three-way valve 13 so that the heat branch 8b is connected to the coolant pipe line 8a. Accordingly, the coolant fluid circulates inside the coolant pipe line 8a, the heat branch 8b and the short-cut path 8c, and is supplied to the on-vehicle battery 4. Consequently, in a case where the temperature of the on-vehicle battery 4 is low after the engine 7 is started, the coolant fluid is supplied to the on-vehicle battery 4 so that the on-vehicle battery 4 is warmed up.

Further, in a case where the temperature of the on-vehicle battery 4 reaches the battery operation lower-limit temperature Tsc2 or in a case where the temperature of the on-vehicle battery 4 exceeds the battery operation lower-limit temperature Tsc2, the controller 15 actuates the engine 7, and operates the second three-way valve 14 so that the short-cut path 8c is disconnected from the coolant pipe line 8a, and the coolant fluid is allowed to circulate inside the coolant pipe line 8a and the heat branch 8b, and thus the coolant fluid is supplied to the on-vehicle battery 4 and to the radiator 9. Accordingly, in a case where the temperature of the on-vehicle battery 4 increases up to the battery operation lower-limit temperature Tsc2 due to the warm-up, the coolant fluid is allowed to flow through the radiator 9, thereby restricting the on-vehicle battery 4 and the engine 7 from being excessively heated. Further, the connection and disconnection of the heat branch 8b relative to the coolant pipe line 8a, and the connection and disconnection of the radiator 9 relative to the coolant pipe line 8a are switched, that is, established and disconnected, by means of the first three-way valve 13 and the second three-way valve 14 each of which is constituted by the electromagnetic valve. Accordingly, a temperature status of each component of the vehicle V is accurately controlled. When the engine temperature T_{E} and the battery temperature T_{B} are compared to the engine operation lower-limit temperature Tsc1 and to the battery operation lower-limit temperature Tsc2 in Steps S404 and S406, respectively, it is determined whether or not the engine temperature T_{E} and the battery temperature T_{B} are less than the engine operation lower-limit temperature Tsc1 and the battery operation lower-limit temperature Tsc2, respectively. However, it may be determined whether or not the engine temperature T_{E} and the battery temperature T_{B} are equal to or less than the engine operation lower-limit temperature Tsc1 and the battery operation lower-limit temperature Tsc2, respectively so that cases where the engine temperature T_{E} and the battery temperature T_{B} are equal to the engine operation lower-limit temperature Tsc1 and the battery operation lower-limit temperature Tsc2, respectively, are included. Further, in a similar manner to the Steps S404 and S406, it may be determined whether or not the battery temperature T_{B} is equal to or less than the reference upper-limit temperature Tsh in Step 408.

<Other embodiments> The aforementioned embodiment is not limited thereto and may be modified or extended as follows. When the battery warm-up apparatus is in the engine warm-up mode, in a case where the start switch of the cabin heater is turned on, the first three-way valve 13 may be switched, that is, may be controlled to be switched so that the coolant fluid flows into the heater core 12a on the heat branch 8b. When the battery warm-up apparatus is in the battery warm-up mode 1 and in a case where the temperature of the engine 7 reaches a predetermined temperature, the mode may move to, that is, may be controlled to move to the battery warm-up mode 2.

A the battery warm-up apparatus includes an electric motor (2), a battery (4), an electric generator (6) for charging the battery, an engine (7) for driving the electric generator, a refrigeration circuit (8a) arranged to pass through inside the engine in a manner that a temperature medium flows through an inside thereof, a heat exchanger (9), a battery-heating channel (8b) branched from the refrigeration circuit, arranged to pass through the battery and connected to the refrigeration circuit again, a first switching valve (13) arranged at a first portion of the refrigeration circuit, the battery-heating channel being branched from the refrigeration circuit at the first portion, the first switching valve connecting and disconnecting the battery-heating channel relative to the refrigeration circuit, a battery temperature sensor (4a), and a controller (15) for operating the first switching valve on the basis of temperature (T_{B}) of the battery and for allowing the temperature medium to flow through the battery-heating channel.

## Claims

1. A battery warm-up apparatus, comprising:
an electric motor (2) for driving a wheel (1FR, 1FL);
a battery (4) for supplying electric power to the electric motor (2);
an electric generator (6) for charging the battery (4);
an engine (7) for driving the electric generator (6) without driving the wheel (1FR, 1FL);
a refrigeration circuit (8a) arranged to pass through inside the engine (7) and constituting a closed circuit in a manner that a temperature medium flows through an inside of the refrigeration circuit (8a);
a heat exchanger (9) arranged on the refrigeration circuit (8a);
a battery-heating channel (8b) branched from the refrigeration circuit (8a), arranged to pass through the battery (4) and connected to the refrigeration circuit (8a) again;
a first switching valve (13) arranged at a first portion of the refrigeration circuit (8a), the battery-heating channel (8b) being branched from the refrigeration circuit (8a) at the first portion, the first switching valve (13) connecting and disconnecting the battery-heating channel (8b) relative to the refrigeration circuit (8a);
a battery temperature sensor (4a) for detecting temperature (T_{B}) of the battery (4); and
a controller (15) for operating the first switching valve (13) on the basis of the temperature (T_{B}) of the battery (4) which is detected by the battery temperature sensor (4a) and for allowing the temperature medium to flow through the battery-heating channel (8b).

2. The battery warm-up apparatus according to claim 1, further comprising:
a heater core (12a) for a vehicle cabin heater (12), the heater core (12a) being arranged on the battery-heating channel (8b).

3. The battery warm-up apparatus according to any one of claims 1 and 2, wherein
an engine temperature sensor (7a) for detecting temperature (T_{E}) of the engine (7) is provided at the engine (7),
a bypass path (8c) is connected to the refrigeration circuit (8a) in a manner that the bypass path (8c) bypasses the heat exchanger (9),
a second switching valve (14) is arranged at a second portion of the refrigeration circuit (8a), the bypass path (8c) is branched from the refrigeration circuit (8a) at the second portion, the second switching valve (14) selectively allows the temperature medium to flow into the heat exchanger (9) and into the bypass path (8c), and
the controller (15) operates the second switching valve (14) on the basis of the temperature (T_{B}) of the battery (4) which is detected by the battery temperature sensor (4a) or on the basis of the temperature (T_{E}) of the engine (7) which is detected by the engine temperature sensor (7a), and thereby stops the temperature medium from flowing to the heat exchanger (9).

4. The battery warm-up apparatus according to claim 3, wherein the controller (15) actuates the engine (7) thereby disconnecting the battery-heating channel (8b) from the refrigeration circuit (8a) by means of the first switching valve (13) and disconnecting the heat exchanger (9) from the refrigeration circuit (8a) by means of the second switching valve (14) and allows the temperature medium to circulate inside the refrigeration circuit (8a) and the bypass path (8c) in a case where the temperature (T_{E}) of the engine (7) which is detected by the engine temperature sensor (7a) is less than a first threshold temperature (Tsc1) which is predetermined or in a case where the temperature (T_{E}) of the engine (7) which is detected by the engine temperature sensor (7a) is equal to or less than the first threshold temperature (Tsc1).

5. The battery warm-up apparatus according to claim 4, wherein the controller (15) actuates the engine (7), operates the first switching valve (13) thereby connecting the battery-heating channel (8b) to the refrigeration circuit (8a), and allows the temperature medium to circulate inside the refrigeration circuit (8a), the battery-heating channel (8b) and the bypass path (8c) and to be supplied to the battery (4) in a case where the temperature (T_{E}) of the engine (7) which is detected by the engine temperature sensor (7a) reaches the first threshold temperature (Tsc1) or in a case where the temperature (T_{E}) of the engine (7) which is detected by the engine temperature sensor (7a) exceeds the first threshold temperature (Tsc1), and in a case where the temperature (T_{B}) of the battery (4) is less than a second threshold temperature (Tsc2) which is higher than the first threshold temperature (Tsc1), or in a case where the temperature (T_{B}) of the battery (4) is equal to or less than the second threshold temperature (Tsc2).

6. The battery warm-up apparatus according to claim 5, wherein the controller (15) actuates the engine (7), operates the second switching valve (14) thereby disconnecting the bypass path (8c) from the refrigeration circuit (8a), and allows the temperature medium to circulate inside the refrigeration circuit (8a) and the battery-heating channel (8b) and to be supplied to the battery (4) and to the heat exchanger (9) in a case where the temperature (T_{B}) of the battery (4) which is detected by the battery temperature sensor (4a) reaches the second threshold temperature (Tsc2) or in a case where the temperature (T_{B}) of the battery (4) which is detected by the battery temperature sensor (4a) exceeds the second threshold temperature (Tsc2).

7. A method of warming up a battery for a vehicle (V), the vehicle (V) including an electric motor (2) for driving a wheel (1FR, 1FL),
a battery (4) for supplying electric power to the electric motor (2),
an electric generator (6) for charging the battery (4),
an engine (7) for driving the electric generator (6) without driving the wheel (1FR, 1FL),
a refrigeration circuit (8a) arranged to pass through inside the engine (7) and constituting a closed circuit in a manner that a temperature medium flows through an inside of the refrigeration circuit (8a),
a heat exchanger (9) arranged on the refrigeration circuit (8a),
a battery-heating channel (8b) branched from the refrigeration circuit (8a), arranged to pass through the battery (4) and connected to the refrigeration circuit (8a) again,
a first switching valve (13) arranged at a first portion of the refrigeration circuit (8a), the battery-heating channel (8b) being branched from the refrigeration circuit (8a) at the first portion, the first switching valve (13) connecting and disconnecting the battery-heating channel (8b) relative to the refrigeration circuit (8a), and
a battery temperature sensor (4a) for detecting temperature (T_{B}) of the battery (4), the method of warming up the battery comprising the steps of:
operating (S407, S409) the first switching valve (13) on the basis of the temperature (T_{B}) of the battery (4) which is detected by the battery temperature sensor (4a) and allowing (S407, S409) the temperature medium to flow through the battery-heating channel (8b).
